# EUROPEAN PATENT APPLICATION

(11) **EP 2 775 650 A1**
(43) Date of publication of application: **10.09.2014**
(21) Application number: 12846351.0
(22) Date of filing: 21.09.2012
(51) Int. Cl.: H04L 1/06

(54) **INFORMATION TRANSMISSION METHOD, SYSTEM, AND DEVICE**

(30) Priority: 04.11.2011 CN 201110346206
(71) Applicant: China Academy of Telecommunications Technology, Hai Dian District Beijing 100191 (CN)
(72) Inventor: ZHANG, Ranran, Beijing 100191 (CN); SU, Xin, Beijing 100191 (CN); XU, Jing, Beijing 100191 (CN); JING, Meifang, Beijing 100191 (CN); ZHAO, Rui, Beijing 100191 (CN)
(74) Representative: Nony
(86) International application number: PCT/CN2012/081719
(87) International publication number: WO 2013/063988

(57) **Abstract**

Embodiments of the present application relate to the technical field of wireless communications, and particularly to an information transmission method, system, and device, used for implement transmission, within an OFDM symbol comprising a UERS, in a sending diversity manner. The information transmission method of the embodiment of the present invention comprises: a network-side device determining an OFDM symbol comprising a UERS; and within the OFDM symbol comprising the UERS, the network-side device sending information in a sending diversity manner by freeing up an available RE or adjusting the sending diversity manner. In the embodiments of the present application, the information can be transmitted in the OFDM symbol comprising the UERS in a sending diversity manner by freeing up a part of available REs or by adjusting the sending diversity manner, thereby improving the utilization ratio of resources.

## Description

This application claims priority to Chinese Patent Application No. 201110346206.6, filed with the Chinese Patent Office on November 14, 2011 and entitled "Information transmission method, system and device", which is hereby incorporated by reference in its entirety.

### Field

The present invention relates to the field of wireless communications, and particularly to an information transmission method, system and device.

### Background

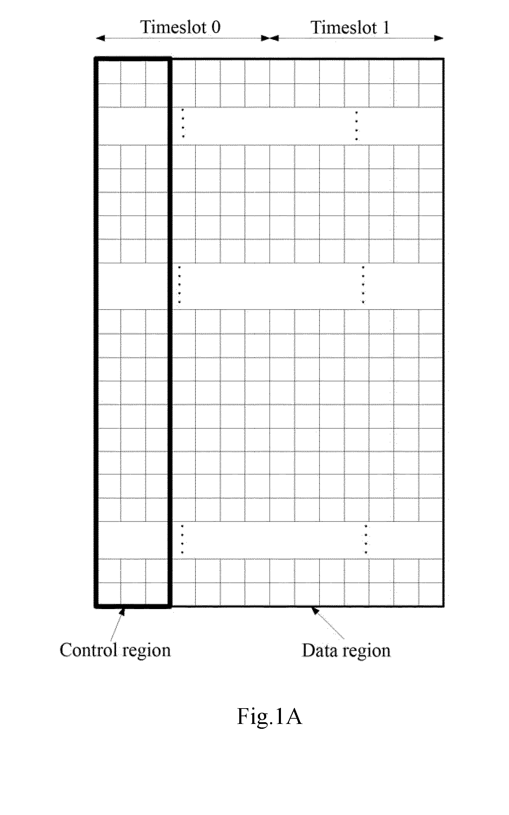

In a Long Term Evolution (LTE) system, Physical Downlink Control Channels (PDCCHs) are transmitted in each radio sub-frame and have a Time Division Multiplexing (TDM) relationship with Physical Downlink Shared Channels (PDSCHs), as illustrated in Fig.1A. The PDCCHs are transmitted in first N Orthogonal Frequency Division Multiplexing (OFDM) symbols of a downlink sub-frame, where N may take the values 1, 2, 3 and 4, and N=4 may be allowable to occur only in a system at a system bandwidth of 1.4MHz.

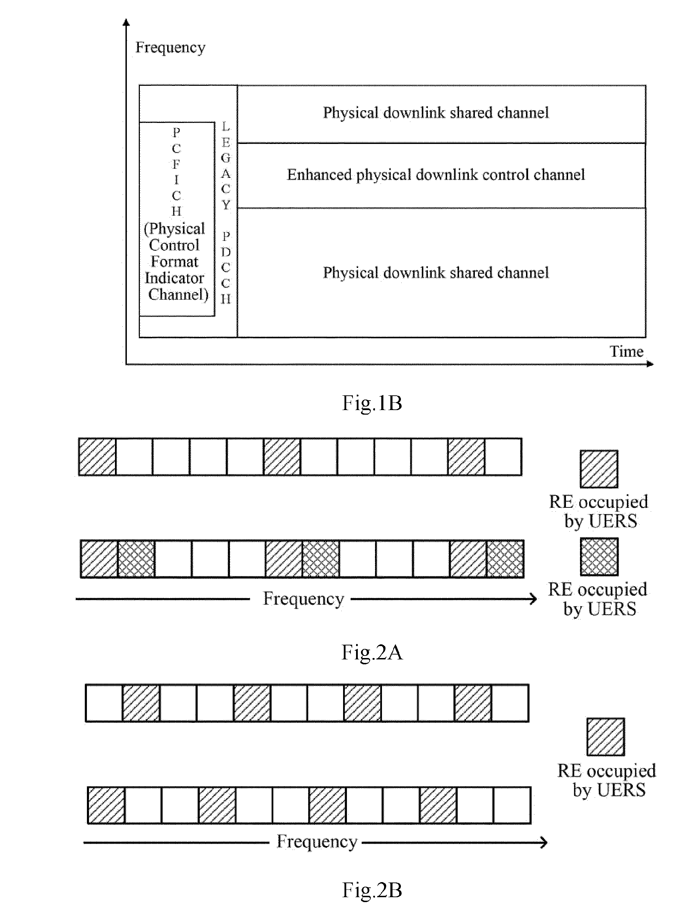

In a Long Term Evolution-Advanced (LTE-A) system, the PDCCHs are enhanced in order to further improve a demand for a capacity of PDCCH channels. For the enhanced PDCCHs, an existing solution is to transmit the enhanced PDCCHs in a PDSCH domain in the downlink sub-frame while reserving an original PDCCH domain. Existing transmission and reception schemes continue their use with the original PDCCH resources in the original PDCCH domain, for example, transmit diversity during transmission and blind detection of Downlink Control Information (DCI) in a public search space and a user equipment specific search space based upon a Cell-Specific Reference Signal (CRS) during reception. The PDCCHs are transmitted in the first N OFDM symbols at the network side, where N may take the values 1, 2, 3 and 4, and N=4 may be allowable to occur only in a system at a system bandwidth of 1.4MHz, and this part of the PDCCH domain is referred to a legacy PDCCH domain. More advanced transmission and reception schemes can be used with a part of the original PDSCH resources in the enhanced PDCCH domain, for example, precoding during transmission and detection based upon a UE-Specific Reference Signal (UERS), i.e. a Demodulation Reference Symbol (DMRS), during reception. The PDCCH are transmitted over time and frequency resources beyond the legacy PDCCH domain at the network side, and this part of the PDCCH domain is referred to as an enhanced PDCCH (E-PDCCH) domain, as illustrated in Fig.1B.

With a Cyclic Prefix (CP), in an OFDM symbol including UERSs, 3 or 6 Resource Elements (REs) in a Physical Resource Block (PRB) pair will be occupied by the UERSs. If there are 3 UERSs, then there are 9 available REs in an OFDM symbol in each PRB pair, and this number is not an integer multiple of 2 or 4, and if there are 6 UERSs, then there are 6 available REs in an OFDM symbol in each PRB pair, and this number is not an integer multiple of 4, and the 3^{rd} available RE and the 4^{th} available RE are spaced by 2 sub-carriers, as illustrated in Fig.2A.

With an extended CP, in an OFDM symbol including UERSs, 4 REs in a PRB pair will be occupied by the UERSs. With the REs of the UERS starting with the 2^{nd} sub-carrier, the (2i-1)-th and 2i-th available REs in an OFDM symbol in each PRB pair are spaced by 1 sub-carrier (i=1, 2, 3 or 4), as illustrated in Fig.2B.

For the transmit diversity scheme, Space-Frequency Block Code (SFBC) is used with 2 antenna ports and both SFBC and Frequency Switched Transmit Diversity (FSTD) are used with 4 antenna ports for the purpose of transmit diversity, where for 2 antenna ports, every 2 REs need to be consecutive in frequency and there are an even number of available REs in an OFDM symbol, and for 4 antenna ports, every 4 REs need to be consecutive in frequency and there are a number, which is an integer multiple of 4, of available REs in an OFDM symbol. The available REs can not satisfy the foregoing condition due to the REs occupied by the UERSs in the OFDM symbol including the UERSs, so there has been absent a solution to transmission in an OFDM symbol including UERSs by means of transmit diversity.

In summary, there is no solution to transmission in an OFDM symbol including UERSs by means of transmit diversity so far.

### Summary

Embodiments of the invention provide a method, system and device for transmitting information so as to transmit in an OFDM symbol including UERSs by means of transmit diversity.

An embodiment of the invention provides a method for transmitting information including:
determining, by a network-side device, an Orthogonal Frequency Division Multiplexing, OFDM, symbol including UE-Specific Reference Signals, UERSs; and
transmitting, by the network-side device, information in the OFDM symbol including the UERSs by means of transmit diversity by sparing available Resource Elements, REs, or by adjusting a transmit diversity scheme.

An embodiment of the invention provides another method for transmitting including:
determining, by a user equipment, an OFDM symbol including UERSs; and
receiving, by the user equipment, information in the OFDM symbol including the UERSs after the information is transmitted at the network side by sparing available REs or by adjusting a transmit diversity scheme.

An embodiment of the invention provides a network-side device for transmitting information including:
a first determination module configured to determine an OFDM symbol including UERSs; and
a transmission module configured to transmit information in the OFDM symbol including the UERSs by means of transmit diversity by sparing available REs or by adjusting a transmit diversity scheme.

An embodiment of the invention provides a user equipment for transmitting information including:
a second determination module configured to determine an OFDM symbol including UERSs; and
a reception module configured to receive information in the OFDM symbol including the UERSs after the information is transmitted at the network side by sparing available REs or by adjusting a transmit diversity scheme.

An embodiment of the invention provides a system for transmitting information including:
a network-side device configured to determine an OFDM symbol including UERSs and to transmit information in the OFDM symbol including the UERSs by means of transmit diversity by sparing available REs or by adjusting a transmit diversity scheme; and
a user equipment configured to determine an OFDM symbol including UERSs and to receive information in the OFDM symbol including the UERSs after the information is transmitted at the network side by sparing available REs or by adjusting a transmit diversity scheme.

In the embodiments of the invention, a part of available REs are spared or a transmit diversity scheme is adjusted so that information can be transmitted in an OFDM symbol including UERSs by means of transmit diversity to thereby improve the utilization ratio of resources.

### Brief Description of the Drawings

Fig.1A is a schematic diagram of a multiplex relationship between a control region and a data region in a downlink sub-frame in the prior art;
Fig.1B is a schematic structural diagram of an enhanced PDCCH in the prior art;
Fig.2A is a schematic diagram of an OFDM symbol including UERSs with a normal CP in the prior art;
Fig.2B is a schematic diagram of an OFDM symbol including UERSs with an extended CP in the prior art;
Fig.3 is a schematic flow chart of a method for transmitting information according to an embodiment of the invention;
Fig.4A is a schematic diagram of a first 2-antenna port SFBC according to an embodiment of the invention;
Fig.4B is a schematic diagram of a first 4-antenna port SFBC+FSTD according to an embodiment of the invention;
Fig.5A is a schematic diagram of a second 2-antenna port SFBC according to an embodiment of the invention;
Fig.5B is a schematic diagram of a third 2-antenna port SFBC according to an embodiment of the invention;
Fig.5C is a schematic diagram of a second 4-antenna port SFBC+FSTD according to an embodiment of the invention;
Fig.5D is a schematic diagram of a third 4-antenna port SFBC+FSTD according to an embodiment of the invention;
Fig.6A is a schematic diagram of a fourth 2-antenna port SFBC according to an embodiment of the invention;
Fig.6B is a schematic diagram of a fifth 2-antenna port SFBC according to an embodiment of the invention;
Fig.7 is a schematic diagram of a sixth 2-antenna port SFBC according to an embodiment of the invention;
Fig.BA is a schematic diagram of 2-antenna port STBC according to an embodiment of the invention;
Fig. 8B is a schematic diagram of 4-antenna port STBC according to an embodiment of the invention;
Fig.9 is a schematic flow chart of a method for receiving information according to an embodiment of the invention;
Fig.10 is a schematic structural diagram of a system for transmitting information according to an embodiment of the invention;
Fig.11 is a schematic structural diagram of a network-side device according to an embodiment of the invention; and
Fig.12 is a schematic structural diagram of a user equipment according to an embodiment of the invention.

### Detailed Description of the Embodiments

In view of that there is no solution to transmission in an OFDM symbol including UERSs by means of transmit diversity so far, in embodiments of the invention, a part of available REs are spared or a transmit diversity scheme is adjusted so that information can be transmitted in an OFDM symbol including UERSs by means of transmit diversity to thereby improve the utilization ratio of resources.

The embodiments of the invention will be further described below in details with reference to the drawings.

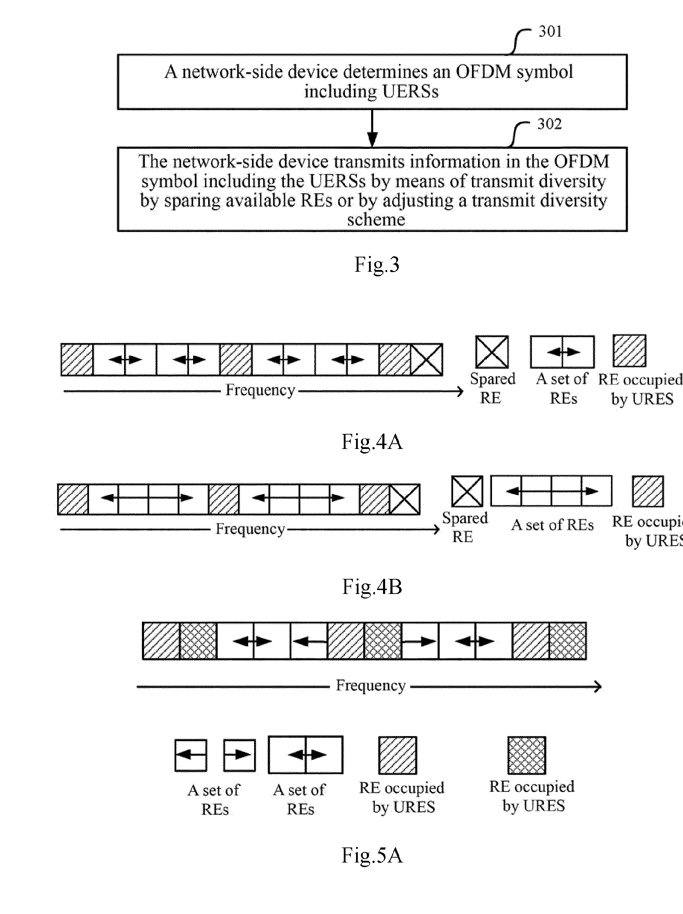

As illustrated in Fig.3, a method for transmitting information according to an embodiment of invention includes the following steps:
Step 301. A network-side device determines an OFDM symbol including UERSs; and
Step 302. The network-side device transmits information in the OFDM symbol including the UERSs by means of transmit diversity by sparing available REs or by adjusting a transmit diversity scheme.

The solution according to the embodiment of the invention will be described below where the network-side device transmits information by sparing available REs and transmits information by adjusting a transmit diversity scheme respectively.

In a first scenario, the network-side device transmits information by sparing available REs.

In a first implementation, a CP in a sub-frame is a normal CP, and for an OFDM symbol including a RE occupied by a Reference Signal of at least one of a UERS port 7, a UERS port 8, a UERS port 11 and a UERS port 12:
Preferably in the step 302, when the network-side performs 2-antenna port transmission with transmit diversity, the network-side device transmits no signal in the last one RE in each PRB pair of the OFDM symbol (that is, by sparing the last one RE in which neither Reference Signal nor data is transmitted, which will also apply below) and transmits a signal encoded with Space-Frequency Block Code (SFBC) respectively over each of sets of resources including a set of the 2^{nd} RE and the 3^{rd} RE, a set of the 4^{th} RE and the 5^{th} RE, a set of the 7^{th} RE and the 8^{th} RE and a set of the 9^{th} RE and the 10^{th} RE in each PRB pair of the OFDM symbol, particularly with reference to Fig.4A.

Preferably in the step 302, when the network-side device performs 4-antenna port transmission with transmit diversity, the network-side device transmits no signal in the last one RE in each PRB pair of the OFDM symbol and transmits a signal encoded with both SFBC and FSTD respectively over each of sets of resources including a set of the 2^{nd} RE, the 3^{rd} RE, the 4^{th} RE and the 5^{th} RE and a set of the 7^{th} RE, the 8^{th} RE, the 9^{th} RE and the 10^{th} RE in each PRB pair of the OFDM symbol, particularly with reference to Fig.4B.

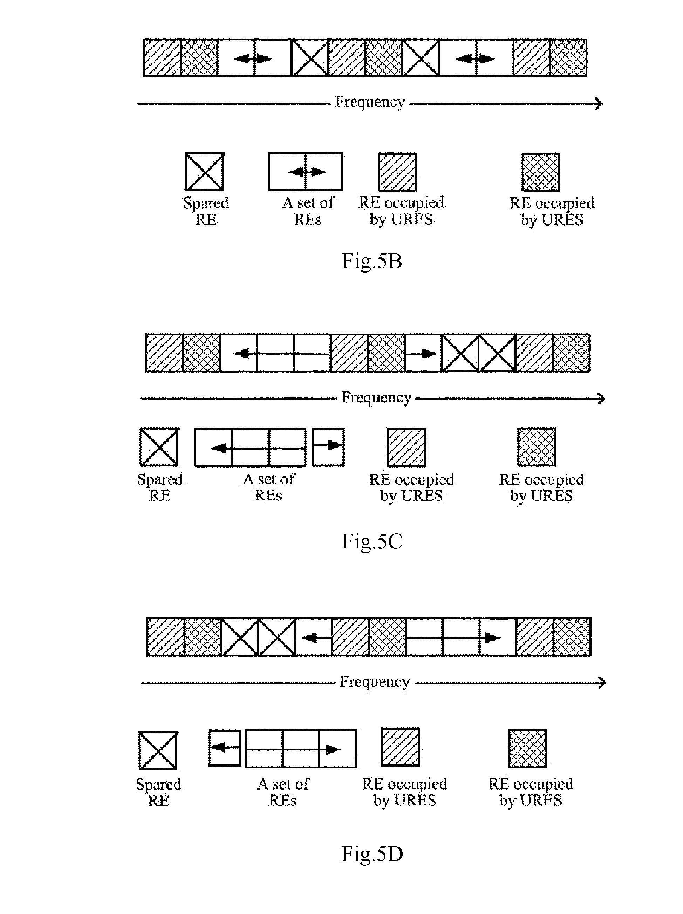

In a second implementation, a CP in a sub-frame is a normal CP, and for an OFDM symbol including a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14:
Preferably in the step 302, when the network-side device performs 2-antenna port transmission with transmit diversity, the network-side device transmits a signal encoded with SFBC respectively over each of sets of resources including a set of the 3^{rd} RE and the 4^{th} RE, a set of the 5^{th} RE and the 8^{th} RE and a set of the 9^{th} RE and the 10^{th} RE in each PRB pair of the OFDM symbol, particularly with reference to Fig.5A; or the network-side device transmits no signal in the 5^{th} RE and the 8^{th} RE in each PRB pair of the OFDM symbol and transmits a signal encoded with SFBC respectively over each of sets of resources including a set of the 3^{rd} RE and the 4^{th} RE and a set of the 9^{th} RE and the 10^{th} RE in each PRB pair of the OFDM symbol, particularly with reference to Fig.5B.

Preferably in the step 302, the network-side device performs 4-antenna port transmission with transmit diversity, the network-side device transmits no signal in the 9^{th} RE and the 10^{th} RE in each PRB pair of the OFDM symbol and transmits a signal encoded with both SFBC and FSTD over a set of resources which is a set of the 3^{rd} RE, the 4^{th} RE, the 5^{th} RE and the 8^{th} RE in each PRB pair of the OFDM symbol, particularly with reference to Fig.5C; or the network-side device transmits no signal in the 2^{nd} RE and the 3^{rd} RE in each PRB pair of the OFDM symbol and transmits a signal encoded with both SFBC and FSTD over a set of resources which is a set of the 5^{th} RE, the 8^{th} RE, the 9^{th} RE and the 10^{th} RE in each PRB pair of the OFDM symbol, particularly with reference to Fig.5D.

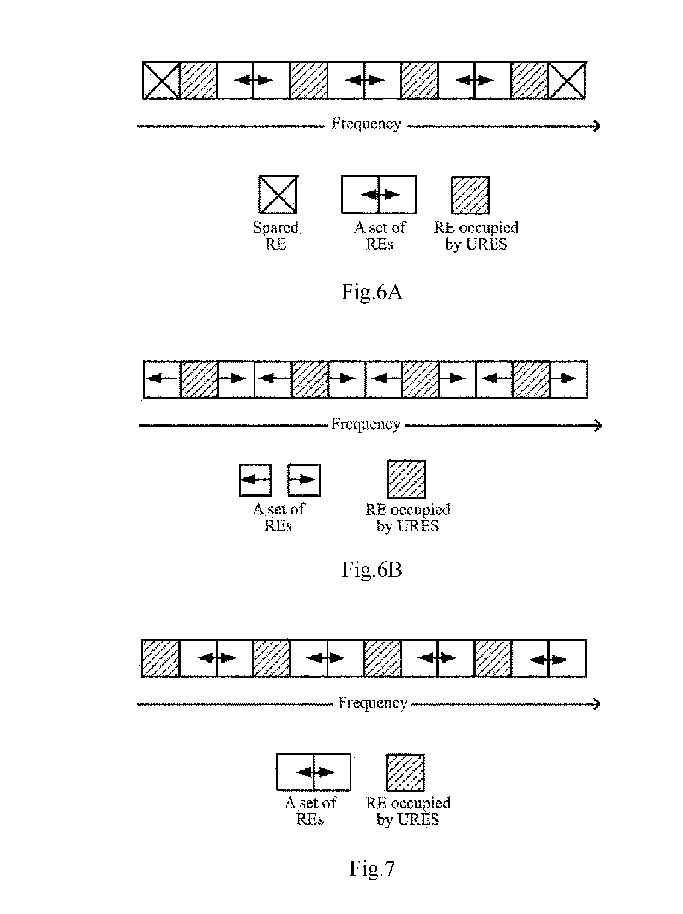

In a third implementation, a CP in a sub-frame is an extended CP, and for an OFDM symbol including REs occupied by Reference Signals of UERS ports 7 and/or a UERS port 8 and located in the first one timeslot in a sub-frame:
Preferably in the step 302, the network-side device performs 2-antenna port transmission with transmit diversity, the network-side device transmits no signal in the 1^{st} RE and the 12^{th} RE in each PRB pair of the OFDM symbol and transmits a signal encoded with SFBC respectively over each of sets of resources including a set of the 3^{rd} RE and the 4^{th} RE, a set of the 6^{th} RE and the 7^{th} RE and a set of the 9^{th} RE and the 10^{th} RE in each PRB pair of the OFDM symbol, particularly with reference to Fig.6A; or the network-side device transmits a signal encoded with SFBC respectively over each of sets of resources including a set of the 1^{st} RE and the 3^{rd} RE, a set of the 4^{th} RE and the 6^{th} RE, a set of the 7^{th} RE and the 9^{th} RE and a set of the 10^{th} RE and the 12^{th} RE in each PRB pair of the OFDM symbol, particularly with reference to Fig.6B.

In a fourth implementation, a CP in a sub-frame is an extended CP, and for an OFDM symbol including REs occupied by Reference Signals of UERS ports 7 and/or a UERS port 8 and located in the last one timeslot in a sub-frame:
Preferably in the step 302, the network-side device performs 2-antenna port transmission with transmit diversity, the network-side device transmits a signal encoded with SFBC respectively over each of sets of resources including a set of the 2^{nd} RE and the 3^{rd} RE, a set of the 5^{th} RE and the 6^{th} RE, a set of the 8^{th} RE and the 9^{th} RE and a set of the 11^{th} RE and the 12^{th} RE in each PRB pair of the OFDM symbol, particularly with reference to Fig.7.

In a second scenario, the network-side device transmits information by adjusting a transmit diversity scheme.

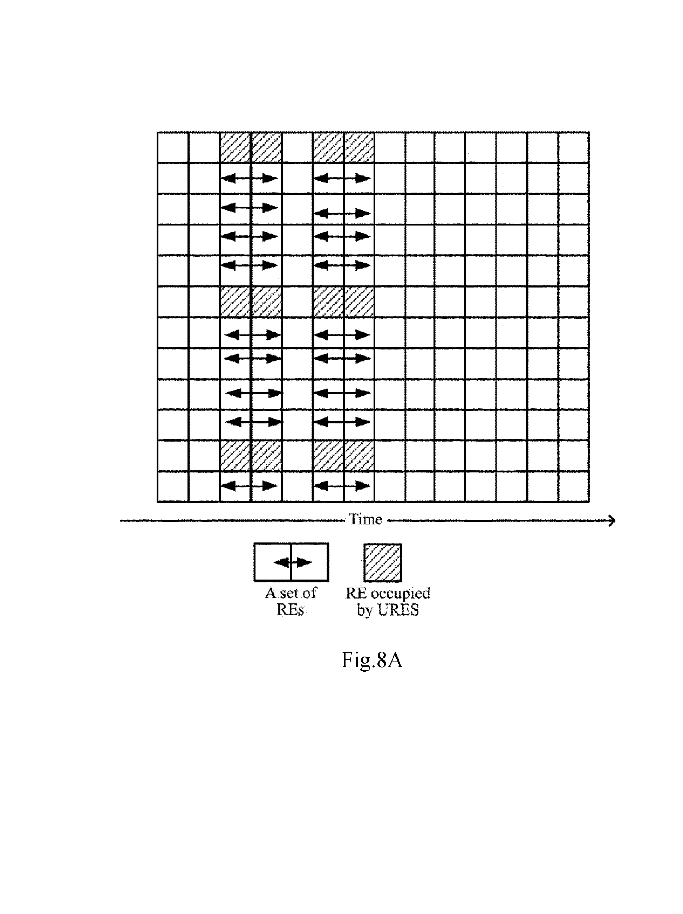

Preferably in the step 302, when the network-side device performs 2-antenna port transmission with transmit diversity, the network-side device transmits a signal encoded with Space-Time Block Code (STBC) over each of sets of resources including respective sets of available REs, over the same sub-carrier, in 2 consecutive OFDM symbols in time including REs occupied by Reference Signals of UERS ports, particularly with reference to Fig.8A.

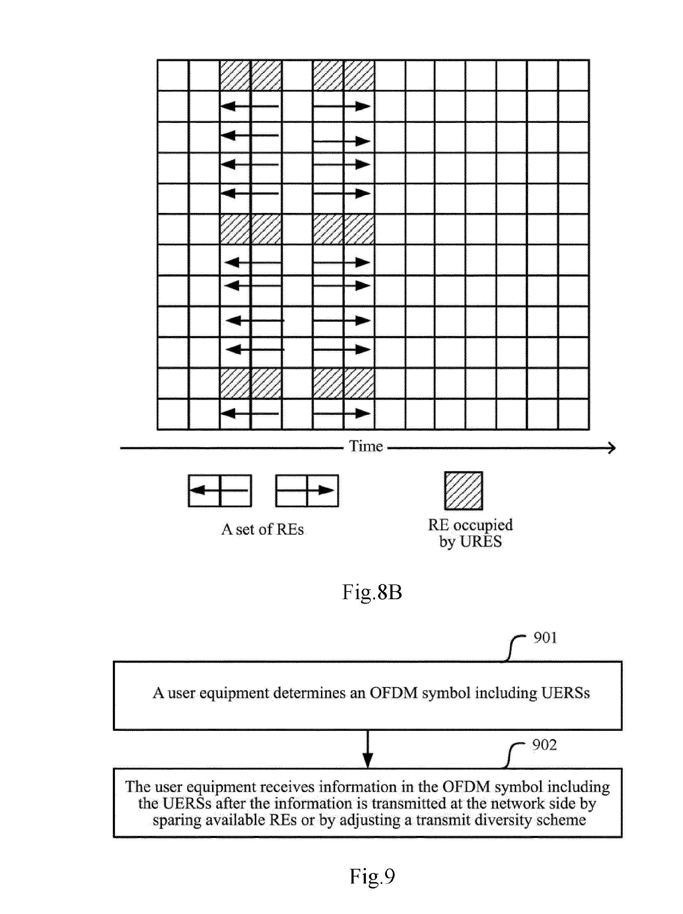

Preferably in the step 302, when the network-side device performs 4-antenna port transmission with transmit diversity, the network-side device transmits a signal encoded with STBC over each of sets of resources including respective sets of available REs, over the same sub-carrier, in 4 OFDM symbols in the same sub-frame and including REs occupied by Reference Signals of UERS ports, particularly with reference to Fig.8B.

As illustrated in Fig.9, a method for receiving information according to an embodiment of the invention includes the following steps:
Step 901. A user equipment determines an OFDM symbol including UERSs; and
Step 902. The user equipment receives information in the OFDM symbol including the UERSs after the information is transmitted at the network side by sparing available REs or by adjusting a transmit diversity scheme.

The solution according to the embodiment of the invention will be described below where the network-side device transmits information by sparing available REs and transmits information by adjusting a transmit diversity scheme respectively.

In a first scenario, the network-side device transmits information by sparing available REs.

In a first implementation, a CP in a sub-frame is a normal CP, and for an OFDM symbol including a RE occupied by a Reference Signal of at least one of a UERS port 7, a UERS port 8, a UERS port 11 and a UERS port 12:
Preferably in the step 902, when 2-antenna port transmission with transmit diversity is performed at the network side, the user equipment receives no signal in the last one RE in each PRB pair of the OFDM symbol and receives a signal encoded with SFBC respectively over each of sets of resources including a set of the 2^{nd} RE and the 3^{rd} RE, a set of the 4^{th} RE and the 5^{th} RE, a set of the 7^{th} RE and the 8^{th} RE and a set of the 9^{th} RE and the 10^{th} RE in each PRB pair of the OFDM symbol, particularly with reference to Fig.4A.

Preferably in the step 902, when 4-antenna port transmission with transmit diversity is performed at the network side, the user equipment receives no signal in the last one RE in each PRB pair of the OFDM symbol and receives a signal encoded with both SFBC and FSTD respectively over each of sets of resources including a set of the 2^{nd} RE, the 3^{rd} RE, the 4^{tn} RE and the 5^{th} RE and a set of the 7^{th} RE, the 8^{th} RE, the 9^{th} RE and the 10^{th} RE in each PRB pair of the OFDM symbol, particularly with reference to Fig.4B.

In a second implementation, a CP in a sub-frame is a normal CP, and for an OFDM symbol including a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14:
Preferably in the step 902, when 2-antenna port transmission with transmit diversity is performed at the network side, the user equipment receives a signal encoded with SFBC respectively over each of sets of resources including a set of the 3^{rd} RE and the 4^{th} RE, a set of the 5^{th} RE and the 8^{th} RE and a set of the 9^{th} RE and the 10^{th} RE in each PRB pair of the OFDM symbol, particularly with reference to Fig.5A; or when 2-antenna port transmission with transmit diversity is performed at the network side, the user equipment receives no signal in the 5^{th} RE and the 8^{th} RE in each PRB pair of the OFDM symbol and receives a signal encoded with SFBC respectively over each of sets of resources including a set of the 3^{rd} RE and the 4^{th} RE and a set of the 9^{th} RE and the 10^{th} RE in each PRB pair of the OFDM symbol, particularly with reference to Fig.5B.

Preferably in the step 902, when 4-antenna port transmission with transmit diversity is performed at the network side, the user equipment receives no signal in the 9^{th} RE and the 10^{th} RE in each PRB pair of the OFDM symbol and receives a signal encoded with both SFBC and FSTD over a set of resources which is a set of the 3^{rd} RE, the 4^{th} RE, the 5^{th} RE and the 8^{th} RE in each PRB pair of the OFDM symbol, particularly with reference to Fig.5C; or when 4-antenna port transmission with transmit diversity is performed at the network side, the user equipment receives no signal in the 2^{nd} RE and the 3^{rd} RE in each PRB pair of the OFDM symbol and receives a signal encoded with both SFBC and FSTD over a set of resources which is a set of the 5^{th} RE, the 8^{th} RE, the 9^{th} RE and the 10^{th} RE in each PRB pair of the OFDM symbol, particularly with reference to Fig.5D.

In a third implementation, a CP in a sub-frame is an extended CP, and for an OFDM symbol including REs occupied by Reference Signals of UERS ports 7 and/or a UERS port 8 and located in the first one timeslot in a sub-frame:
Preferably in the step 902, when 2-antenna port transmission with transmit diversity is performed at the network side, the user equipment receives no signal in the 1^{st} RE and the 12^{th} RE in each PRB pair of the OFDM symbol and receives a signal encoded with SFBC respectively over each of sets of resources including a set of the 3^{rd} RE and the 4^{th} RE, a set of the 6^{th} RE and the 7^{th} RE and a set of the 9^{th} RE and the 10^{th} RE in each PRB pair of the OFDM symbol, particularly with reference to Fig.6A; or when 2-antenna port transmission with transmit diversity is performed at the network side, the user equipment receives a signal encoded with SFBC respectively over each of sets of resources including a set of the 1^{st} RE and the 3^{rd} RE, a set of the 4^{th} RE and the 6^{th} RE, a set of the 7^{th} RE and the 9^{th} RE and a set of the 10^{th} RE and the 12^{th} RE in each PRB pair of the OFDM symbol, particularly with reference to Fig.6B.

In a fourth implementation, a CP in a sub-frame is an extended CP, and for an OFDM symbol including REs occupied by Reference Signals of UERS ports 7 and/or a UERS port 8 and located in the last one timeslot in a sub-frame:
Preferably in the step 902, when 2-antenna port transmission with transmit diversity is performed at the network side, the user equipment receives a signal encoded with SFBC respectively over each of sets of resources including a set of the 2^{nd} RE and the 3^{rd} RE, a set of the 5^{th} RE and the 6^{th} RE, a set of the 8^{th} RE and the 9^{th} RE and a set of the 11^{th} RE and the 12^{th} RE in each PRB pair of the OFDM symbol, particularly with reference to Fig.7.

In a second scenario, the network-side device transmits information by adjusting a transmit diversity scheme.

Preferably in the step 902, when 2-antenna port transmission with transmit diversity is performed at the network side, the user equipment will receive a signal encoded with STBC over each of sets of resources including respective sets of available REs, over the same sub-carrier, in 2 consecutive OFDM symbols in time including REs occupied by Reference Signals of UERS ports.

Preferably in the step 902, when 4-antenna port transmission with transmit diversity is performed at the network side, the user equipment will receive a signal encoded with STBC over each of sets of resources including respective sets of available REs, over the same sub-carrier, in 4 OFDM symbols in the same sub-frame and including REs occupied by Reference Signals of UERS ports.

Particularly Fig.3 and Fig.9 can be combined into a flow which relates to a method for transmitting information, that is, firstly the step 301 and the step 302 and then the step 902 are performed, where the step 901 and the steps 301 and 302 may not be performed at a required order as long as the step 901 is ensured to be performed before the step 902.

Based upon the same inventive idea, embodiments of the invention further provide a base station-side device, a user equipment and a system for transmitting information, and since these devices address the problem under a similar principle to the foregoing methods, reference can be made to the implementations of the methods for implementations of these devices, and a repeated description thereof will be omitted here.

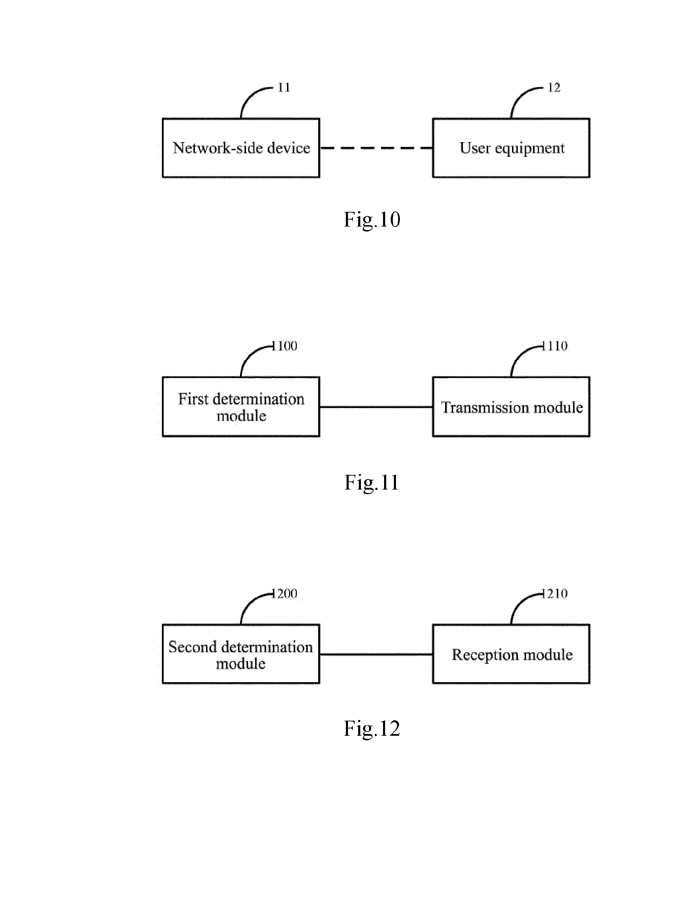

As illustrated in Fig. 10, a system for transmitting information according to an embodiment of the invention includes a network-side device 11 and a user equipment 12.

The network-side device 11 is configured to determine an OFDM symbol including UERSs and to transmit information in the OFDM symbol including the UERSs by means of transmit diversity by sparing available REs or by adjusting a transmit diversity scheme; and
The user equipment 12 is configured to determine an OFDM symbol including UERSs and to receive information in the OFDM symbol including the UERSs after the information is transmitted at the network side by sparing available REs or by adjusting a transmit diversity scheme.

As illustrated in Fig. 11, a network-side device according to an embodiment of the invention includes a first determination module 1100 and a transmission module 1110.

The first determination module 1100 is configured to determine an OFDM symbol including UERSs; and
The transmission module 1110 is configured to transmit information in the OFDM symbol including the UERSs by means of transmit diversity by sparing available REs or by adjusting a transmit diversity scheme.

Preferably if a CP in a sub-frame is a normal CP, then for an OFDM symbol including a RE occupied by a Reference Signal of at least one of a UERS port 7, a UERS port 8, a UERS port 11 and a UERS port 12:
The transmission module 1110 is configured to transmit no signal in the last one RE in each Physical Resource Block (PRB) pair of the OFDM symbol and transmit a signal encoded with SFBC respectively over each of sets of resources including a set of the 2^{nd} RE and the 3^{rd} RE, a set of the 4^{th} RE and the 5^{th} RE, a set of the 7^{th} RE and the 8^{th} RE and a set of the 9^{th} RE and the 10^{th} RE in each PRB pair of the OFDM symbol when performing 2-antenna port transmission with transmit diversity; and

The transmission module 1110 is configured to transmit no signal in the last one RE in each PRB pair of the OFDM symbol and transmit a signal encoded with both SFBC and FSTD respectively over each of sets of resources including a set of the 2^{nd} RE, the 3^{rd} RE, the 4^{tn} RE and the 5^{th} RE and a set of the 7^{th} RE, the 8^{th} RE, the 9^{th} RE and the 10^{th} RE in each PRB pair of the OFDM symbol when performing 4-antenna port transmission with transmit diversity.

Preferably if a CP in a sub-frame is a normal CP, then for an OFDM symbol including a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14:
The transmission module 1110 is configured to transmit a signal encoded with SFBC respectively over each of sets of resources including a set of the 3^{rd} RE and the 4^{th} RE, a set of the 5^{th} RE and the 8^{th} RE and a set of the 9^{th} RE and the 10^{th} RE in each PRB pair of the OFDM symbol when performing 2-antenna port transmission with transmit diversity; or the transmission module 1110 is configured to transmit no signal in the 5^{th} RE and the 8^{th} RE in each PRB pair of the OFDM symbol and transmit a signal encoded with SFBC respectively over each of sets of resources including a set of the 3^{rd} RE and the 4^{th} RE and a set of the 9^{th} RE and the 10^{th} RE in each PRB pair of the OFDM symbol when performing 2-antenna port transmission with transmit diversity.

Preferably if a CP in a sub-frame is a normal CP, then for an OFDM symbol including a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14:
The transmission module 1110 is configured to transmit no signal in the 9^{th} RE and the 10^{th} RE in each PRB pair of the OFDM symbol and transmitting a signal encoded with both SFBC and FSTD over a set of resources which is a set of the 3^{rd} RE, the 4^{th} RE, the 5^{th} RE and the 8^{th} RE in each PRB pair of the OFDM symbol when performing 4-antenna port transmission with transmit diversity; or the transmission module 1110 is configured to transmit no signal in the 2^{nd} RE and the 3^{rd} RE in each PRB pair of the OFDM symbol and transmit a signal encoded with both SFBC and FSTD over a set of resources which is a set of the 5^{th} RE, the 8^{th} RE, the 9^{th} RE and the 10^{th} RE in each PRB pair of the OFDM symbol when performing 4-antenna port transmission with transmit diversity.

Preferably if a CP in a sub-frame is an extended CP, then for an OFDM symbol including REs occupied by Reference Signals of UERS ports 7 and/or a UERS port 8 and located in the first one timeslot in a sub-frame:
The transmission module 1110 is configured to transmit no signal in the 1^{st} RE and the 12^{th} RE in each PRB pair of the OFDM symbol and transmit a signal encoded with SFBC respectively over each of sets of resources including a set of the 3^{rd} RE and the 4^{th} RE, a set of the 6^{th} RE and the 7^{th} RE and a set of the 9^{th} RE and the 10^{th} RE in each PRB pair of the OFDM symbol when performing 2-antenna port transmission with transmit diversity; or the transmission module 1110 is configured to transmit a signal encoded with SFBC respectively over each of sets of resources including a set of the 1^{st} RE and the 3^{rd} RE, a set of the 4^{th} RE and the 6^{th} RE, a set of the 7^{th} RE and the 9^{th} RE and a set of the 10^{th} RE and the 12^{th} RE in each PRB pair of the OFDM symbol when perform 2-antenna port transmission with transmit diversity.

Preferably if a CP in a sub-frame is an extended CP, then for an OFDM symbol including REs occupied by Reference Signals of UERS ports 7 and/or a UERS port 8 and located in the last one timeslot in a sub-frame:
The transmission module 1110 is configured to transmit a signal encoded with SFBC respectively over each of sets of resources including a set of the 2^{nd} RE and the 3^{rd} RE, a set of the 5^{th} RE and the 6^{th} RE, a set of the 8^{th} RE and the 9^{th} RE and a set of the 11^{th} RE and the 12^{th} RE in each PRB pair of the OFDM symbol when performing 2-antenna port transmission with transmit diversity.

Preferably the transmission module 1110 is configured to transmit a signal encoded with STBC over each of sets of resources including respective sets of available REs, over the same sub-carrier, in 2 consecutive OFDM symbols in time including REs occupied by Reference Signals of UERS ports when performing 2-antenna port transmission with transmit diversity.

Preferably the transmission module 1110 is configured to transmit a signal encoded with STBC over each of sets of resources including respective sets of available REs, over the same sub-carrier, in 4 OFDM symbols in the same sub-frame and including REs occupied by Reference Signals of UERS ports when performing 4-antenna port transmission with transmit diversity.

As illustrated in Fig.12, a user equipment according to an embodiment of the invention includes a second determination module 1200 and a reception module 1210.

The second determination module 1200 is configured to determine an OFDM symbol including UERSs; and
The reception module 1210 is configured to receive information in the OFDM symbol including the UERSs after the information is transmitted at the network side by sparing available REs or by adjusting a transmit diversity scheme.

Preferably if a CP in a sub-frame is a normal CP, then for an OFDM symbol including a RE occupied by a Reference Signal of at least one of a UERS port 7, a UERS port 8, a UERS port 11 and a UERS port 12:
The reception module 1210 is configured, when 2-antenna port transmission with transmit diversity is performed at the network side, to receive no signal in the last one RE in each PRB pair of the OFDM symbol and to receive a signal encoded with SFBC respectively over each of sets of resources including a set of the 2^{nd} RE and the 3^{rd} RE, a set of the 4^{tn} RE and the 5^{th} RE, a set of the 7^{th} RE and the 8^{th} RE and a set of the 9^{th} RE and the 10^{th} RE in each PRB pair of the OFDM symbol; and
The reception module 1210 is configured, when 4-antenna port transmission with transmit diversity is performed at the network side, to receive no signal in the last one RE in each PRB pair of the OFDM symbol and to receive a signal encoded with both SFBC and FSTD respectively over each of sets of resources including a set of the 2^{nd} RE, the 3^{rd} RE, the 4^{tn} RE and the 5^{th} RE and a set of the 7^{th} RE, the 8^{th} RE, the 9^{th} RE and the 10^{th} RE in each PRB pair of the OFDM symbol.

Preferably if a CP in a sub-frame is a normal CP, then for an OFDM symbol including a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14:
The reception module 1210 is configured, when 2-antenna port transmission with transmit diversity is performed at the network side, to receive a signal encoded with SFBC respectively over each of sets of resources including a set of the 3^{rd} RE and the 4^{th} RE, a set of the 5^{th} RE and the 8^{th} RE and a set of the 9^{th} RE and the 10^{th} RE in each PRB pair of the OFDM symbol; or to receive no signal in the 5^{th} RE and the 8^{th} RE in each PRB pair of the OFDM symbol and to receive a signal encoded with SFBC respectively over each of sets of resources including a set of the 3^{rd} RE and the 4^{th} RE and a set of the 9^{th} RE and the 10^{th} RE in each PRB pair of the OFDM symbol.

Preferably if a CP in a sub-frame is a normal CP, then for an OFDM symbol including a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14:

The reception module 1210 is configured, when 4-antenna port transmission with transmit diversity is performed at the network side, to receive no signal in the 9^{th} RE and the 10^{th} RE in each PRB pair of the OFDM symbol and to receive a signal encoded with both SFBC and FSTD over a set of resources which is a set of the 3^{rd} RE, the 4^{th} RE, the 5^{th} RE and the 8^{th} RE in each PRB pair of the OFDM symbol; or to receive no signal in the 2^{nd} RE and the 3^{rd} RE in each PRB pair of the OFDM symbol and to receive a signal encoded with both SFBC and FSTD over a set of resources which is a set of the 5^{th} RE, the 8^{th} RE, the 9^{th} RE and the 10^{th} RE in each PRB pair of the OFDM symbol.

Preferably if a CP in a sub-frame is an extended CP, then for an OFDM symbol including REs occupied by Reference Signals of UERS ports 7 and/or a UERS port 8 and located in the first one timeslot in a sub-frame:
The reception module 1210 is configured, when 2-antenna port transmission with transmit diversity is performed at the network side, to receive no signal in the 1^{st} RE and the 12^{th} RE in each PRB pair of the OFDM symbol and to receive a signal encoded with SFBC respectively over each of sets of resources including a set of the 3^{rd} RE and the 4^{th} RE, a set of the 6^{th} RE and the 7^{th} RE and a set of the 9^{th} RE and the 10^{th} RE in each PRB pair of the OFDM symbol; or to receive a signal encoded with SFBC respectively over each of sets of resources including a set of the 1^{st} RE and the 3^{rd} RE, a set of the 4^{th} RE and the 6^{th} RE, a set of the 7^{th} RE and the 9^{th} RE and a set of the 10^{th} RE and the 12^{th} RE in each PRB pair of the OFDM symbol.

Preferably if a CP in a sub-frame is an extended CP, then for an OFDM symbol including REs occupied by Reference Signals of UERS ports 7 and/or a UERS port 8 and located in the last one timeslot in a sub-frame:
The reception module 1210 is configured, when 2-antenna port transmission with transmit diversity is performed at the network side, to receive a signal encoded with SFBC respectively over each of sets of resources including a set of the 2^{nd} RE and the 3^{rd} RE, a set of the 5^{th} RE and the 6^{th} RE, a set of the 8^{th} RE and the 9^{th} RE and a set of the 11^{th} RE and the 12^{th} RE in each PRB pair of the OFDM symbol.

Preferably the reception module 1210 is configured, when 2-antenna port transmission with transmit diversity is performed at the network side, to receive a signal encoded with STBC over each of sets of resources including respective sets of available REs, over the same sub-carrier, in 2 consecutive OFDM symbols in time including REs occupied by Reference Signals of UERS ports.

Preferably the reception module 1210 is configured, when 4-antenna port transmission with transmit diversity is performed at the network side, to receive a signal encoded with STBC over each of sets of resources including respective sets of available REs, over the same sub-carrier, in 4 OFDM symbols in the same sub-frame and including REs occupied by Reference Signals of UERS ports.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A method for transmitting information, wherein the method comprises:
determining, by a network-side device, an Orthogonal Frequency Division Multiplexing, OFDM, symbol comprising UE-Specific Reference Signals, UERSs; and
transmitting, by the network-side device, information in the OFDM symbol comprising the UERSs by means of transmit diversity by sparing available Resource Elements, REs, or by adjusting a transmit diversity scheme.

2. The method according to claim 1, wherein transmitting, by the network-side device, information in the OFDM symbol comprising the UERSs by means of transmit diversity by sparing available REs comprises:
if a Cyclic Prefix, CP, in a sub-frame is a normal CP, then for an OFDM symbol comprising a RE occupied by a Reference Signal of at least one of a UERS port 7, a UERS port 8, a UERS port 11 and a UERS port 12, the network-side device transmitting no signal in the last one RE in each Physical Resource Block, PRB, pair of the OFDM symbol and transmitting a signal encoded with Space-Frequency Block Code, SFBC, respectively over each of sets of resources comprising a set of the 2^{nd} RE and the 3^{rd} RE, a set of the 4^{th} RE and the 5^{th} RE, a set of the 7^{th} RE and the 8^{th} RE and a set of the 9^{th} RE and the 10^{th} RE in each PRB pair of the OFDM symbol when performing 2-antenna port transmission with transmit diversity.

3. The method according to claim 1, wherein transmitting, by the network-side device, information in the OFDM symbol comprising the UERSs by means of transmit diversity by sparing available REs comprises:
if a Cyclic Prefix, CP, in a sub-frame is a normal CP, then for an OFDM symbol comprising a RE occupied by a Reference Signal of at least one of a UERS port 7, a UERS port 8, a UERS port 11 and a UERS port 12, the network-side device transmitting no signal in the last one RE in each PRB pair of the OFDM symbol and transmitting a signal encoded with both SFBC and Frequency-Switched Transmit Diversity, FSTD, respectively over each of sets of resources comprising a set of the 2^{nd} RE, the 3^{rd} RE, the 4^{th} RE and the 5^{th} RE and a set of the 7^{th} RE, the 8^{tn} RE, the 9^{th} RE and the 10^{th} RE in each PRB pair of the OFDM symbol when performing 4-antenna port transmission with transmit diversity.

4. The method according to claim 1, wherein transmitting, by the network-side device, information in the OFDM symbol comprising the UERSs by means of transmit diversity by sparing available REs comprises:
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, the network-side device transmitting a signal encoded with SFBC respectively over each of sets of resources comprising a set of the 3^{rd} RE and the 4^{th} RE, a set of the 5^{th} RE and the 8^{th} RE and a set of the 9^{th} RE and the 10^{th} RE in each PRB pair of the OFDM symbol when performing 2-antenna port transmission with transmit diversity; or
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, the network-side device transmitting no signal in the 5^{th} RE and the 8^{th} RE in each PRB pair of the OFDM symbol and transmitting a signal encoded with SFBC respectively over each of sets of resources comprising a set of the 3^{rd} RE and the 4^{th} RE and a set of the 9^{th} RE and the 10^{th} RE in each PRB pair of the OFDM symbol when performing 2-antenna port transmission with transmit diversity.

5. The method according to claim 1, wherein transmitting, by the network-side device, information in the OFDM symbol comprising the UERSs by means of transmit diversity by sparing available REs comprises:
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, the network-side device transmitting no signal in the 9^{th} RE and the 10^{th} RE in each PRB pair of the OFDM symbol and transmitting a signal encoded with both SFBC and FSTD over a set of resources which is a set of the 3^{rd} RE, the 4^{th} RE, the 5^{th} RE and the 8^{th} RE in each PRB pair of the OFDM symbol when performing 4-antenna port transmission with transmit diversity; or
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, the network-side device transmitting no signal in the 2^{nd} RE and the 3^{rd} RE in each PRB pair of the OFDM symbol and transmitting a signal encoded with both SFBC and FSTD over a set of resources which is a set of the 5^{th} RE, the 8^{th} RE, the 9^{th} RE and the 10^{th} RE in each PRB pair of the OFDM symbol when performing 4-antenna port transmission with transmit diversity.

6. The method according to claim 1, wherein transmitting, by the network-side device, information in the OFDM symbol comprising the UERSs by means of transmit diversity by sparing available REs comprises:
if a CP in a sub-frame is an extended CP, then for an OFDM symbol comprising REs occupied by Reference Signals of UERS ports 7 and/or a UERS port 8 and located in the first one timeslot in a sub-frame, the network-side device transmitting no signal in the 1^{st} RE and the 12^{th} RE in each PRB pair of the OFDM symbol and transmitting a signal encoded with SFBC respectively over each of sets of resources comprising a set of the 3^{rd} RE and the 4^{th} RE, a set of the 6^{th} RE and the 7^{th} RE and a set of the 9^{th} RE and the 10^{th} RE in each PRB pair of the OFDM symbol when performing 2-antenna port transmission with transmit diversity; or
if a CP in a sub-frame is an extended CP, then for an OFDM symbol comprising REs occupied by Reference Signals of UERS ports 7 and/or a UERS port 8 and located in the first one timeslot in a sub-frame, the network-side device transmitting a signal encoded with SFBC respectively over each of sets of resources comprising a set of the 1^{st} RE and the 3^{rd} RE, a set of the 4^{th} RE and the 6^{th} RE, a set of the 7^{th} RE and the 9^{th} RE and a set of the 10^{th} RE and the 12^{th} RE in each PRB pair of the OFDM symbol when performing 2-antenna port transmission with transmit diversity.

7. The method according to claim 1, wherein transmitting, by the network-side device, information in the OFDM symbol comprising the UERSs by means of transmit diversity by sparing available REs e comprises:
if a CP in a sub-frame is an extended CP, then for an OFDM symbol comprising REs occupied by Reference Signals of UERS ports 7 and/or a UERS port 8 and located in the last one timeslot in a sub-frame, the network-side device transmitting a signal encoded with SFBC respectively over each of sets of resources comprising a set of the 2^{nd} RE and the 3^{rd} RE, a set of the 5^{th} RE and the 6^{th} RE, a set of the 8^{th} RE and the 9^{th} RE and a set of the 11^{th} RE and the 12^{th} RE in each PRB pair of the OFDM symbol when performing 2-antenna port transmission with transmit diversity.

8. The method according to claim 1, wherein transmitting, by the network-side device, information in the OFDM symbol comprising the UERSs by means of transmit diversity by adjusting a transmit diversity scheme comprises:
the network-side device transmitting a signal encoded with STBC over each of sets of resources comprising respective sets of available REs, over the same sub-carrier, in 2 consecutive OFDM symbols in time comprising REs occupied by Reference Signals of UERS ports when performing 2-antenna port transmission with transmit diversity.

9. The method according to claim 1, wherein transmitting, by the network-side device, information in the OFDM symbol comprising the UERSs by means of transmit diversity by adjusting a transmit diversity scheme comprises:
the network-side device transmitting a signal encoded with STBC over each of sets of resources comprising respective sets of available REs, over the same sub-carrier, in 4 OFDM symbols in the same sub-frame and comprising REs occupied by Reference Signals of UERS ports when performing 4-antenna port transmission with transmit diversity.

10. An information transmission method, wherein the method comprises:
determining, by a user equipment, an OFDM symbol comprising UERSs; and
receiving, by the user equipment, information in the OFDM symbol comprising the UERSs after the information is transmitted at the network side by sparing available REs or by adjusting a transmit diversity scheme.

11. The method according to claim 10, wherein receiving, by the user equipment, information in the OFDM symbol comprising the UERSs after the information is transmitted at the network side by sparing available REs comprises:
if a CP in a sub-frame is a normal CP, then for an OFDM symbol comprising a RE occupied by a Reference Signal of at least one of a UERS port 7, a UERS port 8, a UERS port 11 and a UERS port 12, the user equipment receiving no signal in the last one RE in each PRB pair of the OFDM symbol and receiving a signal encoded with SFBC respectively over each of sets of resources comprising a set of the 2^{nd} RE and the 3^{rd} RE, a set of the 4^{th} RE and the 5^{th} RE, a set of the 7^{th} RE and the 8^{th} RE and a set of the 9^{th} RE and the 10^{th} RE in each PRB pair of the OFDM symbol when 2-antenna port transmission with transmit diversity is performed at the network side.

12. The method according to claim 10, wherein receiving, by the user equipment, information in the OFDM symbol comprising the UERSs after the information is transmitted at the network side by sparing available REs comprises:
if a CP in a sub-frame is a normal CP, then for an OFDM symbol comprising a RE occupied by a Reference Signal of at least one of a UERS port 7, a UERS port 8, a UERS port 11 and a UERS port 12, the user equipment receiving no signal in the last one RE in each PRB pair of the OFDM symbol and receiving a signal encoded with both SFBC and FSTD respectively over each of sets of resources comprising a set of the 2^{nd} RE, the 3^{rd} RE, the 4^{th} RE and the 5^{th} RE and a set of the 7^{th} RE, the 8^{th} RE, the 9^{th} RE and the 10^{th} RE in each PRB pair of the OFDM symbol when 4-antenna port transmission with transmit diversity is performed at the network side.

13. The method according to claim 10, wherein receiving, by the user equipment, information in the OFDM symbol comprising the UERSs after the information is transmitted at the network side by sparing available REs comprises:
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, the user equipment receiving a signal encoded with SFBC respectively over each of sets of resources comprising a set of the 3^{rd} RE and the 4^{th} RE, a set of the 5^{th} RE and the 8^{th} RE and a set of the 9^{th} RE and the 10^{th} RE in each PRB pair of the OFDM symbol when 2-antenna port transmission with transmit diversity is performed at the network side; or
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, the user equipment receiving no signal in the 5^{th} RE and the 8^{th} RE in each PRB pair of the OFDM symbol and receiving a signal encoded with SFBC respectively over each of sets of resources comprising a set of the 3^{rd} RE and the 4^{tn} RE and a set of the 9^{th} RE and the 10^{th} RE in each PRB pair of the OFDM symbol when 2-antenna port transmission with transmit diversity is performed at the network side.

14. The method according to claim 10, wherein receiving, by the user equipment, information in the OFDM symbol comprising the UERSs after the information is transmitted at the network side by sparing available REs comprises:
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, the user equipment receiving no signal in the 9^{th} RE and the 10^{th} RE in each PRB pair of the OFDM symbol and receiving a signal encoded with both SFBC and FSTD over a set of resources which is a set of the 3^{rd} RE, the 4^{tn} RE, the 5^{th} RE and the 8^{th} RE in each PRB pair of the OFDM symbol when 4-antenna port transmission with transmit diversity is performed at the network side; or
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, the user equipment receiving no signal in the 2^{nd} RE and the 3^{rd} RE in each PRB pair of the OFDM symbol and receiving a signal encoded with both SFBC and FSTD over a set of resources which is a set of the 5^{th} RE, the gun RE, the 9^{th} RE and the 10^{th} RE in each PRB pair of the OFDM symbol when 4-antenna port transmission with transmit diversity is performed at the network side.

15. The method according to claim 10, wherein receiving, by the user equipment, information in the OFDM symbol comprising the UERSs after the information is transmitted at the network side by sparing available REs comprises:
if a CP in a sub-frame is an extended CP, then for an OFDM symbol comprising REs occupied by Reference Signals of UERS ports 7 and/or a UERS port 8 and located in the first one timeslot in a sub-frame, the user equipment receiving no signal in the 1^{st} RE and the 12^{th} RE in each PRB pair of the OFDM symbol and receiving a signal encoded with SFBC respectively over each of sets of resources comprising a set of the 3^{rd} RE and the 4^{th} RE, a set of the 6^{th} RE and the 7^{th} RE and a set of the 9^{th} RE and the 10^{th} RE in each PRB pair of the OFDM symbol when 2-antenna port transmission with transmit diversity is performed at the network side; or
if a CP in a sub-frame is an extended CP, then for an OFDM symbol comprising REs occupied by Reference Signals of UERS ports 7 and/or a UERS port 8 and located in the first one timeslot in a sub-frame, the user equipment receiving a signal encoded with SFBC respectively over each of sets of resources comprising a set of the 1^{st} RE and the 3^{rd} RE, a set of the 4^{th} RE and the 6^{th} RE, a set of the 7^{th} RE and the 9^{th} RE and a set of the 10^{th} RE and the 12^{th} RE in each PRB pair of the OFDM symbol when 2-antenna port transmission with transmit diversity is performed at the network side.

16. The method according to claim 10, wherein receiving, by the user equipment, information in the OFDM symbol comprising the UERSs after the information is transmitted at the network side by sparing available REs comprises:
if a CP in a sub-frame is an extended CP, then for an OFDM symbol comprising REs occupied by Reference Signals of UERS ports 7 and/or a UERS port 8 and located in the last one timeslot in a sub-frame, the user equipment receiving a signal encoded with SFBC respectively over each of sets of resources comprising a set of the 2^{nd} RE and the 3^{rd} RE, a set of the 5^{th} RE and the 6^{th} RE, a set of the 8^{th} RE and the 9^{th} RE and a set of the 11^{th} RE and the 12^{th} RE in each PRB pair of the OFDM symbol when 2-antenna port transmission with transmit diversity is performed at the network side.

17. The method according to claim 10, wherein receiving, by the user equipment, information in the OFDM symbol comprising the UERSs after the information is transmitted at the network side by adjusting a transmit diversity scheme comprises:
the user equipment receiving a signal encoded with STBC over each of sets of resources comprising respective sets of available REs, over the same sub-carrier, in 2 consecutive OFDM symbols in time comprising REs occupied by Reference Signals of UERS ports when 2-antenna port transmission with transmit diversity is performed at the network side,.

18. The method according to claim 10, wherein receiving, by the user equipment, information in the OFDM symbol comprising the UERSs after the information is transmitted at the network side by adjusting a transmit diversity scheme comprises:
the user equipment receiving a signal encoded with STBC over each of sets of resources comprising respective sets of available REs, over the same sub-carrier, in 4 OFDM symbols in the same sub-frame and comprising REs occupied by Reference Signals of UERS ports when 4-antenna port transmission with transmit diversity is performed at the network side.

19. A network-side device for transmitting information, wherein the network-side device comprises:
a first determination module configured to determine an OFDM symbol comprising UERSs; and
a transmission module configured to transmit information in the OFDM symbol comprising the UERSs by means of transmit diversity by sparing available REs or by adjusting a transmit diversity scheme.

20. The device according to claim 19, wherein the transmission module is further configured:
if a CP in a sub-frame is a normal CP, then for an OFDM symbol comprising a RE occupied by a Reference Signal of at least one of a UERS port 7, a UERS port 8, a UERS port 11 and a UERS port 12, to transmit no signal in the last one RE in each Physical Resource Block, PRB, pair of the OFDM symbol and transmit a signal encoded with SFBC respectively over each of sets of resources comprising a set of the 2^{nd} RE and the 3^{rd} RE, a set of the 4^{th} RE and the 5^{th} RE, a set of the 7^{th} RE and the 8^{th} RE and a set of the 9^{th} RE and the 10^{th} RE in each PRB pair of the OFDM symbol when performing 2-antenna port transmission with transmit diversity.

21. The device according to claim 19, wherein the transmission module is further configured:
if a CP in a sub-frame is a normal CP, then for an OFDM symbol comprising a RE occupied by a Reference Signal of at least one of a UERS port 7, a UERS port 8, a UERS port 11 and a UERS port 12, to transmit no signal in the last one RE in each PRB pair of the OFDM symbol and transmit a signal encoded with both SFBC and FSTD respectively over each of sets of resources comprising a set of the 2^{nd} RE, the 3^{rd} RE, the 4^{th} RE and the 5^{th} RE and a set of the 7^{th} RE, the 8^{th} RE, the 9^{th} RE and the 10^{th} RE in each PRB pair of the OFDM symbol when performing 4-antenna port transmission with transmit diversity.

22. The device according to claim 19, wherein the transmission module is further configured:
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, to transmit a signal encoded with SFBC respectively over each of sets of resources comprising a set of the 3^{rd} RE and the 4^{th} RE, a set of the 5^{th} RE and the 8^{th} RE and a set of the 9^{th} RE and the 10^{th} RE in each PRB pair of the OFDM symbol when performing 2-antenna port transmission with transmit diversity; or
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, to transmit no signal in the 5^{th} RE and the 8^{tn} RE in each PRB pair of the OFDM symbol and transmit a signal encoded with SFBC respectively over each of sets of resources comprising a set of the 3^{rd} RE and the 4^{th} RE and a set of the 9^{th} RE and the 10^{th} RE in each PRB pair of the OFDM symbol when performing 2-antenna port transmission with transmit diversity.

23. The device according to claim 19, wherein the transmission module is further configured:
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, to transmit no signal in the 9^{th} RE and the 10^{th} RE in each PRB pair of the OFDM symbol and transmit a signal encoded with both SFBC and FSTD over a set of resources which is a set of the 3^{rd} RE, the 4^{th} RE, the 5^{th} RE and the 8^{th} RE in each PRB pair of the OFDM symbol when performing 4-antenna port transmission with transmit diversity; or
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, to transmit no signal in the 2^{nd} RE and the 3^{rd} RE in each PRB pair of the OFDM symbol and transmit a signal encoded with both SFBC and FSTD over a set of resources which is a set of the 5^{th} RE, the 8^{th} RE, the 9^{th} RE and the 10^{th} RE in each PRB pair of the OFDM symbol when performing 4-antenna port transmission with transmit diversity.

24. The device according to claim 19, wherein the transmission module is further configured:
if a CP in a sub-frame is an extended CP, then for an OFDM symbol comprising REs occupied by Reference Signals of UERS ports 7 and/or a UERS port 8 and located in the first one timeslot in a sub-frame, transmit no signal in the 1^{st} RE and the 12^{th} RE in each PRB pair of the OFDM symbol and by transmit a signal encoded with SFBC respectively over each of sets of resources comprising a set of the 3^{rd} RE and the 4^{th} RE, a set of the 6^{th} RE and the 7^{th} RE and a set of the 9^{th} RE and the 10^{th} RE in each PRB pair of the OFDM symbol when performing 2-antenna port transmission with transmit diversity; or
if a CP in a sub-frame is an extended CP, then for an OFDM symbol comprising REs occupied by Reference Signals of UERS ports 7 and/or a UERS port 8 and located in the first one timeslot in a sub-frame, to transmit a signal encoded with SFBC respectively over each of sets of resources comprising a set of the 1^{st} RE and the 3^{rd} RE, a set of the 4^{th} RE and the 6^{th} RE, a set of the 7^{th} RE and the 9^{th} RE and a set of the 10^{th} RE and the 12^{th} RE in each PRB pair of the OFDM symbol when performing 2-antenna port transmission with transmit diversity.

25. The device according to claim 19, wherein the transmission module is further configured:
if a CP in a sub-frame is an extended CP, then for an OFDM symbol comprising REs occupied by Reference Signals of UERS ports 7 and/or a UERS port 8 and located in the last one timeslot in a sub-frame, to transmit a signal encoded with SFBC respectively over each of sets of resources comprising a set of the 2^{nd} RE and the 3^{rd} RE, a set of the 5^{th} RE and the 6^{th} RE, a set of the 8^{th} RE and the 9^{th} RE and a set of the 11^{th} RE and the 12^{th} RE in each PRB pair of the OFDM symbol when performing 2-antenna port transmission with transmit diversity.

26. The device according to claim 19, wherein the transmission module is further configured:
to transmit a signal encoded with STBC over each of sets of resources comprising respective sets of available REs, over the same sub-carrier, in 2 consecutive OFDM symbols in time comprising REs occupied by Reference Signals of UERS ports when performing 2-antenna port transmission with transmit diversity.

27. The device according to claim 19, wherein the transmission module is further configured:
to transmit a signal encoded with STBC over each of sets of resources comprising respective sets of available REs, over the same sub-carrier, in 4 OFDM symbols in the same sub-frame and comprising REs occupied by Reference Signals of UERS ports when performing 4-antenna port transmission with transmit diversity.

28. A user equipment for transmitting information, wherein the user equipment comprises:
a second determination module configured to determine an OFDM symbol comprising UERSs; and
a reception module configured to receive information in the OFDM symbol comprising the UERSs after the information is transmitted at the network side by sparing available REs or by adjusting a transmit diversity scheme.

29. The user equipment according to claim 28, wherein the reception module is further configured:
if a CP in a sub-frame is a normal CP, then for an OFDM symbol comprising a RE occupied by a Reference Signal of at least one of a UERS port 7, a UERS port 8, a UERS port 11 and a UERS port 12, to receive no signal in the last one RE in each PRB pair of the OFDM symbol and to receive a signal encoded with SFBC respectively over each of sets of resources comprising a set of the 2^{nd} RE and the 3^{rd} RE, a set of the 4^{th} RE and the 5^{th} RE, a set of the 7^{th} RE and the 8^{th} RE and a set of the 9^{th} RE and the 10^{th} RE in each PRB pair of the OFDM symbol when 2-antenna port transmission with transmit diversity is performed at the network side.

30. The user equipment according to claim 28, wherein the reception module is further configured:
if a CP in a sub-frame is a normal CP, then for an OFDM symbol comprising a RE occupied by a Reference Signal of at least one of a UERS port 7, a UERS port 8, a UERS port 11 and a UERS port 12, to receive no signal in the last one RE in each PRB pair of the OFDM symbol and to receive a signal encoded with both SFBC and FSTD respectively over each of sets of resources comprising a set of the 2^{nd} RE, the 3^{rd} RE, the 4^{th} RE and the 5^{th} RE and a set of the 7^{th} RE, the 8^{th} RE, the 9^{th} RE and the 10^{th} RE in each PRB pair of the OFDM symbol when 4-antenna port transmission with transmit diversity is performed at the network side.

31. The user equipment according to claim 28, wherein the reception module is further configured:
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, to receive a signal encoded with SFBC respectively over each of sets of resources comprising a set of the 3^{rd} RE and the 4^{th} RE, a set of the 5^{th} RE and the 8^{th} RE and a set of the 9^{th} RE and the 10^{th} RE in each PRB pair of the OFDM symbol when 2-antenna port transmission with transmit diversity is performed at the network side; or
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, to receive no signal in the 5^{th} RE and the 8^{tn} RE in each PRB pair of the OFDM symbol and to receive a signal encoded with SFBC respectively over each of sets of resources comprising a set of the 3^{rd} RE and the 4^{th} RE and a set of the 9^{th} RE and the 10^{th} RE in each PRB pair of the OFDM symbol when 2-antenna port transmission with transmit diversity is performed at the network side.

32. The user equipment according to claim 28, wherein the reception module is further configured:
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, to receive no signal in the 9^{th} RE and the 10^{th} RE in each PRB pair of the OFDM symbol and to receive a signal encoded with both SFBC and FSTD over a set of resources which is a set of the 3^{rd} RE, the 4^{th} RE, the 5^{th} RE and the 8^{th} RE in each PRB pair of the OFDM symbol when 4-antenna port transmission with transmit diversity is performed at the network side; or
if a CP in a sub-frame is a normal CP, then for an OFDM symbol comprising a RE occupied by a Reference Signal of at least one of a UERS port 7, a UERS port 8, a UERS port 11 and a UERS port 12, and a RE occupied by a Reference Signal of at least one of a UERS port 9, a UERS port 10, a UERS port 13 and a UERS port 14, to receive no signal in the 2^{nd} RE and the 3^{rd} RE in each PRB pair of the OFDM symbol and to receive a signal encoded with both SFBC and FSTD over a set of resources which is a set of the 5^{th} RE, the 8^{th} RE, the 9^{th} RE and the 10^{th} RE in each PRB pair of the OFDM symbol when 4-antenna port transmission with transmit diversity is performed at the network side.

33. The user equipment according to claim 28, wherein the reception module is further configured:
if a CP in a sub-frame is an extended CP, then for an OFDM symbol comprising REs occupied by Reference Signals of UERS ports 7 and/or a UERS port 8 and located in the first one timeslot in a sub-frame, to receive no signal in the 1^{st} RE and the 12^{th} RE in each PRB pair of the OFDM symbol and to receive a signal encoded with SFBC respectively over each of sets of resources comprising a set of the 3^{rd} RE and the 4^{th} RE, a set of the 6^{th} RE and the 7^{th} RE and a set of the 9^{th} RE and the 10^{th} RE in each PRB pair of the OFDM symbol when 2-antenna port transmission with transmit diversity is performed at the network side; or
if a CP in a sub-frame is an extended CP, then for an OFDM symbol comprising REs occupied by Reference Signals of UERS ports 7 and/or a UERS port 8 and located in the first one timeslot in a sub-frame, to receive a signal encoded with SFBC respectively over each of sets of resources comprising a set of the 1^{st} RE and the 3^{rd} RE, a set of the 4^{th} RE and the 6^{th} RE, a set of the 7^{th} RE and the 9^{th} RE and a set of the 10^{th} RE and the 12^{th} RE in each PRB pair of the OFDM symbol when 2-antenna port transmission with transmit diversity is performed at the network side.

34. The user equipment according to claim 28, wherein the reception module is further configured:
if a CP in a sub-frame is an extended CP, then for an OFDM symbol comprising REs occupied by Reference Signals of UERS ports 7 and/or a UERS port 8 and located in the last one timeslot in a sub-frame, to receive a signal encoded with SFBC respectively over each of sets of resources comprising a set of the 2^{nd} RE and the 3^{rd} RE, a set of the 5^{th} RE and the 6^{th} RE, a set of the 8^{th} RE and the 9^{th} RE and a set of the 11^{th} RE and the 12^{th} RE in each PRB pair of the OFDM symbol when 2-antenna port transmission with transmit diversity is performed at the network side.

35. The user equipment according to claim 28, wherein the reception module is further configured:
to receive a signal encoded with STBC over each of sets of resources comprising respective sets of available REs, over the same sub-carrier, in 2 consecutive OFDM symbols in time comprising REs occupied by Reference Signals of UERS ports when 2-antenna port transmission with transmit diversity is performed at the network side.

36. The user equipment according to claim 28, wherein the reception module is further configured:
to receive a signal encoded with STBC over each of sets of resources comprising respective sets of available REs, over the same sub-carrier, in 4 OFDM symbols in the same sub-frame and comprising REs occupied by Reference Signals of UERS ports when 4-antenna port transmission with transmit diversity is performed at the network side.

37. A system for transmitting information, wherein the system comprises:
a network-side device configured to determine an OFDM symbol comprising UERSs and to transmit information in the OFDM symbol comprising the UERSs by means of transmit diversity by sparing available REs or by adjusting a transmit diversity scheme; and
a user equipment configured to determine an OFDM symbol comprising UERSs and to receive information in the OFDM symbol comprising the UERSs after the information is transmitted at the network side by sparing available REs or by adjusting a transmit diversity scheme.
